**Europäisches Patentamt**

**European Patent Office**

**Office européen des brevets**

(19)

(11) Numéro de publication: **0 021 893**
**B1**

(12) # FASCICULE DE BREVET EUROPEEN

(45) Date de publication du fascicule du brevet:
**01.02.84**

(51) Int. Cl.³: **G 01 N 27/90**

(21) Numéro de dépôt: **80400759.9**

(22) Date de dépôt: **29.05.80**

(54) Procédé et dispositif d'inspection de produits métalliques par courants de Foucault et application du procédé et du dispositif.

(30) Priorité: **14.06.79 FR 7915481**

(43) Date de publication de la demande:
**07.01.81 Bulletin 81/1**

(45) Mention de la délivrance du brevet:
**01.02.84 Bulletin 84/5**

(84) Etats contractants désignés:
**BE DE GB IT LU NL**

(56) Documents cités:
**DE - A - 1 950 122**
**DE - A - 2 614 382**
**DE - A - 2 814 125**
**FR - A - 2 412 841**
**FR - A - 2 422 952**
**FR - A - 2 425 069**

**Patents Abstracts of Japan Vol. 3, No. 82, 14 juillet 1979 page 106E123**

(73) Titulaire: **INSTITUT DE RECHERCHES DE LA SIDERURGIE FRANCAISE (IRSID) France, 185, rue Président Roosevelt, F-78105 Saint-Germain-en-Laye (FR)**

(72) Inventeur: **Boehm, Bernard, 35, rue de la Croix de Fer, F-78100 Saint-Germain-en-Laye (FR)**
Inventeur: **Lacroix, Marc, 6, Impasse des Pêcheries, F-78230 Le Pecq (FR)**

(74) Mandataire: **Tuppin, Claude et al, 185, rue Président Roosevelt, F-78105 Saint-Germain-en-Laye (FR)**

## Procédé et dispositif d'inspection de produits métalliques par courants de Foucault et application du procédé et du dispositif

l'invention se situe dans le domaine de l'inspection électromagnétique de produits métalliques, par courants de Foucault, pour détecter les défauts superficiels.

Un certain nombre de méthodes électromagnétiques de sondage des défauts de surface sont déjà connues. Pour la plupart, elles sont basées sur une magnétisation à saturation du produit, cette dernière provoquant une discontinuité du champ magnétique à l'endroit des défauts ainsi que l'apparition de lignes de fuite. Les hétérogénéités du champ peuvent ensuite être matérialisées par saupoudrage de limaille de fer, qui s'accumule aux emplacements des défauts; cette méthode, désignée sous le terme de magnétoscopie, est assez fine, cependant elle ne donne pas de bons résultats sur les produits calaminés, de fournit pas d'indication sur la profondeur des défauts et s'effectue de façon presque totalement manuelle, surtout dans la partie repérage des défauts qui est visuelle. La détection optique est basée sur le même principe, mais l'emploi d'une poudre magnétique colorée permet l'observation du produit à l'aide d'une caméra de télévision et le repérage de défauts peut être automatisé. La méthode du flux de fuite consiste à mesurer le champ magnétique par utilisation de sondes de Hall; elle ne convient guère que pour les produits décalaminés mais, pour ces derniers, elle est relativement quantitative et permet d'apprécier l'importance des défauts; elle est également facilement automatisable. Toutes des techniques ont pour inconvénients principaux de ne s'appliquer, dans des conditions de sensibilité satisfaisantes, qu'aux produits préalablement déclaminés et de nécessiter une magnétisation préalable puis une désaimantation du produit après sondage. Ces deux étapes consomment de l'énergie, en quantité variable selon le produit, mais toujour élevée.

Une autre technique, dont le procédé selon l'invention fait partie, est basée sur l'utilisation des courants de Foucault. En effet, l'impédance d'une bobine couplée électromagnétiquement avec le produit examiné varie avec un vertain nombre de paramètres liés à ce dernier, tels que sa perméabilité magnétique (si l'on est en-dessous du point de Curie dans le cas de l'acier), sa résistivité, la présence de défauts et la distance bobine-produit. Cette technique présente, comme la méthode du flux de fuite, l'avantage de permettre une évaluation de l'importance des défauts. Cependant, elle possède généralement aussi l'inconvénient de nécessiter de magnétiser à saturation les produits afin d'éliminer les variation locales de perméabilité magnétique, puis de les démagnétiser.

Pour illuster ce type de technique, on citera par exemple le procédé décrit dans le brevet allemand DE-A-1 950 122 et qui met en oeuvre un arrangement différential d'une paire de bobines dans un pont dont on détecte un signal de déséquilibre reflétant l'existence d'un défaut sous l'une des bobines. En outre, selon ce procédé, on détermine en fonction de la longueur est égale à la longueur du produit, ce qui peut permettre d'évaluer les défauts »longs« à la surface du produit.

La méthode du flux de fuite et la technique des courants de Faucault qui viennent d'être rappelées, procurent généralement une sensibilité satisfaisante pour la détection de petits défauts, lorsqu'elles sont mises en oeuvre sur des produits magnétisés. Le coût d'une telle détection, si elle est supportable pour des produits finis, est souvent prohibitive pour des demi-produits. Par contre, il n'est généralement pas nécessaire de rechercher l'existence de féfauts très fins sur des demi-produits.

Le but de la présente invention est de fournir un procédé entièrement automatique permettant de détecter les défauts de surface et d'évaluer leur profondeur ou leur longueur, applicable avec une sensibilité satisfaisante à des produits non décalaminés ne présentant pas de fortes variations de perméabilité magnétique, tout en évitant l'obligation de magnétiser, puis de démagnétiser le produit.

Ce but est atteint au moyen d'un procédé tel que défini dans la revendication 1.

Selon une variante d'exécution du procédé suivant l'invention, applicable dans le cas de séries de produits de même nature, on utilise comme ligne de base la valeur obtenue pour le produit précédent.

Selon une caractéristique de l'invention les signaux fournis par les ponts de mesure sont démodulés en phase par projection sur un axe choisi à l'avance.

Afin d'assurer une meilleure sensibilité, les sections d'inspection sont imbriquées et de largeur réglable.

L'invention a également pour objet un dispositif de mise en oeuvre du procédé, dispositif tel que défini dans la revendication 5.

L'invention s'applique de façon particulièrement avantaguese au sondage à froid des billettes carrées ou rectangulaires.

Comme on le comprend, le procédé selon l'invention est basé sur la détection et le traitement des signaux de déséquilibre d'un pont dont deux branches sont constituées par des bobines inductrices couplées électromagnétiquement avec le produit à inspecteur, ces signaux étant fonction notamment de la présence de défauts superficiels. En fait, même en l'absence de variation de paramètres influant sur l'impédance des bobines, dans une zone saine du produit en particulier, les ponts sont rarement équilibrés et on peut mesurer en permanence une tension résiduelle variable au cours du temps. Ce phénomène est causé par des dérives électroniques, thermiques et des déréglages des appareils ainsi que par des variations de nuance et de température du produit ou des modifications de positionnement de la sonde. La présence, lors de l'inspection d'une zone saine, d'une tension résiduelle est extrêmement gênante lorsqu'on évalue des variations d'un paramètre par comparaison des signaux fournis par le pont à des seuils d'amplitude. En effet, ces seuils sont générés à partir du zéro électrique et donc fixes par rapport à ce dernier, alors que la ligne de base, correspondant à cette tension résiduelle, est essentiellement variable en fonction des conditions expérimentales et peut se placer n'importe où par rapport aux seuils. On risque par conséquent de ne pas voir certains défauts et on ne peut en évaluer le nombre.

Une solution à ce problème consiste à asservir les seuils à la ligne de base, mais cette méthode nécessite l'utilisation d'un système de filtrage complexe dans sa réalisation et d'utilisation difficile. De plus, certains défauts longs peuvent être confondus avec une variation de la ligne de base, si la tension qu'ils produisent dure assez longtemps, et ne sont par conséquent pas détectés. Une autre possibilité consiste à utiliser un rééquilibrage électronique permanent du pont, mais elle présente le même inconvénient: les défauts longs sont masqués, du moins partiellement. On pourrait, bien entendu, dans les deux cas, évaluer la longueur du défaut le plus long pouvant être rencontré et imposer un retard supérieur à cette valeur, mais alors la perte de sensibilité des deux méthodes devient trop importante.

La solution objet de l'invention procède d'une démarche analogue: lier les seuils à la ligne de base, mais met en oeuvre un moyen différent: la détermination effective de la ligne de base à partir des tensions des ponts mesurées par rapport au zéro électrique, pat calcul de la moyenne des valeurs obtenues par échantillonnage. Ensuite, suivant l'application envisagée: produits différents les uns des autres ou série de produits de même type (même composition chimique, même perméabilité magnétique, même résistivité), on peut procéder de deux manières: soit calculer pour chaque produit la ligne de base, soit utiliser pour un produit donné la valeur de la ligne de base obtenue pour le produit précédent. La première méthode est, bien entendu, plus exacte et plus précise, cependant, elle présente deux inconvénients: tous les calculs de comparaison par rapport aux seuils sont effectués après le passage du produit, leur obtention nécessite par conséquent un certain temps, d'autre part, il faut stocker toutes les valeurs en mémoire et donc disposer d'une mémoire de grande capacité. Dans la seconde variante, tous les calculs sont faits en temps réel, c'est-à-dire au fur et à mesure que le produit défile sous la sonde; le temps d'attente après le passage du produit est par ceonséquent réduit et la capacité de mémoire nécessaire moins grande.

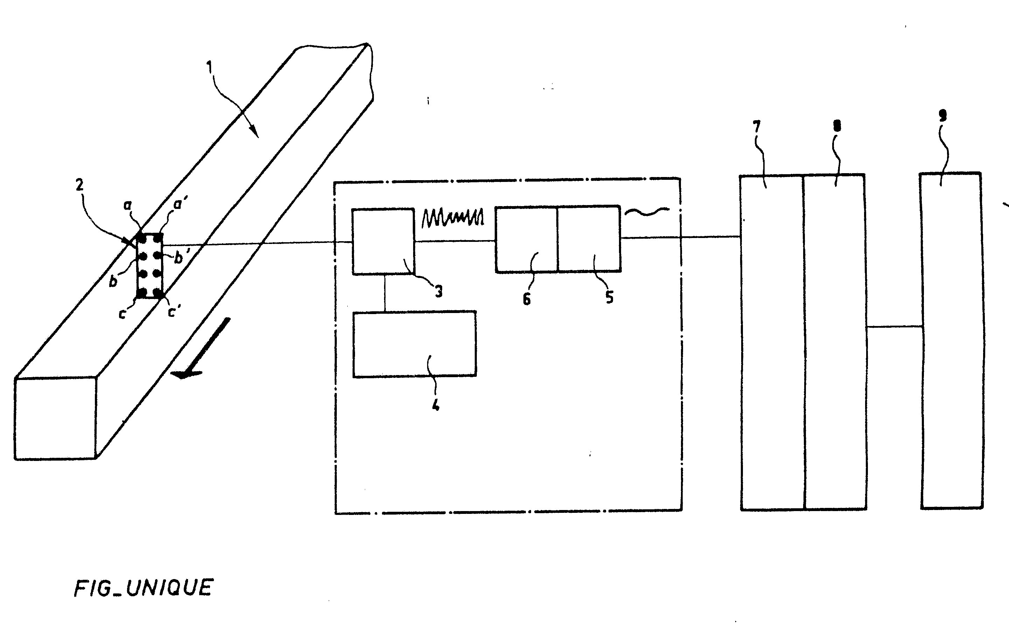

L'invention sera mieux comprise au vu de la description qui va suivre, donnée en reférence à la planche de dessin annexée sur laquelle la figure unique schématise un dispositif de mise en oeuvre du procédé selon l'invention.

L'exemple choisi, donné à titre purement illustratif, concerne l'inspection à froid de billettes carrées. Ce sondage peut être effectué par le procédé selon l'invention sans magnétisation de la billette, pour la recherche des défauts superficiels susceptibles d'entrîner des incidents de laminage ou de se répercuter sur la qualité du produit final, grâce essentiellement au montage différentiel des bobines sur chaque face de la billette inspectée.

La billette 1 est inspectée, sur chacune de ses faces, par quatre détecteurs semblables. Seul le détecteur 2, disposé au-dessus de la face supérieure, a été représenté pour ne pas surcharger la figure. Ce détecteur est indique à celui décrit dans la demande de brevet français n° 77/39.415, publiée sous le n° 2 412 841 le 20. 7. 1079, à laquelle on pourra se reporter, pour plus de détails, si nécessaire. Il est constitué de paires de bobines plates aa', bb', cc', décalées longitudinalement et transversalement les unes par rapport aux autres, ici au nombre de quatre paires, logées dans un bloc de matière diélectrique rigide. Des moyens de roulement, vomme des galets, ou de glissement, non représentés, sont prévus pour conférer à l'ensemble un mouvement relatif par rapport à la billette. Les bobines telles que aa', bb', cc', sont groupées deux à deux dans des ponts 3, dont les deux autres branches sont constituées par des potentiomètres réglables, reliès à une alimentation 4 courant alternatif, à la fréquence de 100 kHz dans l'exemple considéré.

Les tensions de déséquilibre fournies par les quatre ponts de chacune des faces de la billette varient en fonction de la distance des bobines au produit, de la présence éventuelle de défauts et de la variation des caractéristiques magnétiques de l'acier. Ceci se traduit par un déplacement de l'extrémité du vecteur représentant dans le plan complexe (c'est-à-dire dans le plan amplitude-phase) de la tension de déséquilibre de chaque pont. On sait que le lieu géométrique de cette extrémité, lorsqu'un seul de ces paramètres varie (par exemple la distance entre la sonde et le produit) est sensiblement rectiligne.

Par une projection adéquate du vecteur sur une direction parallèle à ce lieu, les variations d'impédance des bobines correspondant à ce paramètre peuvent être éliminées. Le principe de l'élimination de l'influence d'un paramètre perturbateur par de telles projections est exposé dans la demande de brever français 78/11.459, publiée sous le n° 2 422 952 le 9. 11. 79 auquel on pourra se reporter, bien qu'il s'agisse ici d'un système monofréquence, alors que la demande selon FR-A-2 422 952 concerne un système multi-fréquence. Cette projection est ici réalisée par des premiers échantillonneurs bloueurs 5 précédés d'étages d'amplification 6. Les échantillonneurs bloquers 5 effectuent une démodulation synchrone du signal à 100 kHz, ce qui correspond à une projection des vecteurs représentatifs des tensions de déséquilibre sur un axe judicieusement choisi, que l'on peut déterminer expérimentalement à l'aide de quelques essais. On a choisi de régler cette projection pour éliminer l'effet des variations de distance entre les sondes et la billette qui sont en pratique les plus gênantes. Dans d'autres cas, il pourrait être nécessaire d'éliminer plutôt un autre paramètre. Les signaux de déséquilibre démodulés sont envoyés dans un système d'échantillonnage et de conversion analogique-numérique à 16 entrées, constitué par un second échantillonneur bloquer 7 associé à un convertisseur analogique-numérique 8. L'échantillonneur bloquer fournit, à intervalles choisis à l'avance, permettant d'obtenir une précision suffisante, une tension analogique que le convertisseur analogique-numérique 8 transforme en signal numérique. En général, on considère, compte tenu de la vitesse de la billette, qu'il faut trois points d'écchantillonnage le long du diamètre d'une bobine. Le début et la fin de l'acquisition des données sont déclenchés par les passages respectifs de la tête et de l'extrémité de la billette devant un détecteur de présence du produit classique, par exemple de type inductif ou optique, non représenté.

Les signaux numériques de sortie Xi du convertisseur analogique-numérique 8 sont introduits dans un calculateur 9. Dans le présent exemple, le calculateur 9 utilisé est du type microprocesseur et a une capacité de mémoire de 64 Kmots de 16 bits, il permet d'effectuer le sondage avec calcul de la moyenne à postériori, mais il aurait été possible d'employer un calculateur de capacité de mémoire plus faible. Le microprocesseur 9 met en mémoire les valeurs Xi puis effectue le calcul de la moyenne de ces valeurs pour obtenir la ligne de base ou tension OFF. Il effectue ensuite toutes les différences:

$$Xi - OFF$$

et en compare la valeur absolue à deux seuils positifs $S_1$ et $S_2$. Les différences supérieures à $S_1$ en valeur absolue correspondant à la présence de défauts et l'emploi d'un second seuil $S_2$ supérieur au premier, permet d'évaluer l'importance de chacun de ces défauts.

Pour les défauts longs, il est également intéressant de pouvoir apprécier la longueur. Pour cela, on détermine des sections d'inspection dont la largeur est choisie à l'avance et dont le nombre dépend de la longueur de la billette examinée. On peut soit utiliser des sections d'inspection adjacentes, dont la somme des largeurs est sensiblement égale à la longueur de la billette soit, pour obtenir une précision meilleure, des section d'inspection imbriquées. Pour chacune des sections d'inspection, on effectue la somme des valeurs absolues des différences Xi − OFF et on la compare à un seuil

$S_3$. Les valeurs supérieures à $S_3$ correspondent à la présence d'un défaut long la section d'inspection considérée et le nombre de sections d'inspection sur lesquelles ce défaut apparaît permet d'en évaluer la longueur.

Toutes ces opérations de calcul ne sont pas immédiates et l'on conçoit aisément que, pour ne pas ralentir la cadence de l'installation où les billettes arrivent toutes les dix secondes environ, il est avantageux, dans le cas de sondage de séries de billettes identiques, d'utiliser de la seconde à la dernière billette, la valeur de la ligne de base calculée pour la billette précédente. Les dérives dues à l'appareillage sont en effet suffisamment lentes pour être négligeables entre deux billettes successives.

De plus, pour des billettes de 12 m exemple, il faut pour assurer une bonne détection des défauts courts, échantillonner environ 5000 points par voie, donc, au total 80 000 points. Compte tenu du nombre de données à stocker, il est alors nécessaire d'employer un calculateur à grande capacité de mémoire.

En fin de sondage de la billette 1, le microprocesseur 9 a en mémoire le positionnement et le type des défauts (lons ou courts) ainsi que l'appréciation de leur longueur ou de leur importance. Ces résultats peuvent être exploités de diverses manières, soit en prévoyant des dispositifs de marquage qui projettent des peintures de couleur différente suivant la classe de défaut, soit des dispositifs de cartographie reliés à l'ordinateur. Ce dernier peut même, en fonction de critéres choisis à l'avance, effectuer directement le classement des billettes.

L'invention permet de détecter les défauts longs et d'obtenir des résultats satisfaisants sur des produits calaminés.

**Revendications**

1. Procédé d'inspection par courants de Foucault d'un produit métallique couplé électromagnétiquement avec au moins deux bobines d'instruction en mouvement relatif par rapport au produit (1) et alimentées en courant alternatif, les bobines étant groupées par paires et la ou chaque alimenté en courant alternatif et dont on recueille le signal de déséquilibre pour fournier une indication de la présence d'un défaut dans le produit inspecté, caractérisé en ce que:

— on effectue une démodulation synchrone du signal de déséquilibre par projection sur un axe choisi à l'avance pour fournier une tension de déséquilibre,
— on effectue un échantillonnage de la tension de déséquilibre à des intervalles de temps prédéterminés et l'on transforme cette tension en signaux numériques,
— on met en mémoires les valeurs numériques obtenues,
— on calcule la valeur moyenne de ces valeurs numériques pour obtenir une ligne de base,

— on effectue la différence entre la ligne de base et chacune des valeurs numériques mises en mémoire,

— on compare ces différences ou leurs valeurs absolues à deux seuils prédéterminés, dont l'un correspond à la valeur de la différence la plus petite dont la présence doit être détectée, et dont l'autre correspond à une valeur plus élevée,

— on détermine, en fonction de la longueur du produit, des sections d'inspection de manière que la somme des largeurs des sections soit sensiblement égale à la longueur du produit,

— on calcule, pour chaque section, la somme des valeurs absolues des différences entre la ligne de base et chacune des valeurs absolues mises en mémoire, et

— on compare chacune de ces sommes à un seuil prédéterminé.

2. Procédé selon la revendication 1, caractérisé en ce que, dans le cas des séries de produits de même nature, on retranche des valeurs numériques mises en mémoire la ligne de base obtenue pour le produit précédent et on effectue les comparaisons avec les trois seuils à partir des valeurs obtenues.

3. Procédé selon l'une quelconque des revendications 1 ou 2, caractérisé en ce que les sections sont en nombre supérieur à celui nécessaire pour couvrir tout le produit et se recouvrent partiellement.

4. Procédé selon l'une quelconque des revendications 1 à 3, caractérisé en ce que les sections sont de largeur réglable.

5. Dispositif pour la mise en oeuvre du procédé selon la revendivation 1, comprenant: des bobines d'induction en nombre pair groupées par deux, la ou chaque paire de bobines (aa', bb', cc') étant disposée dans un pont (3) relié à une alimentation (4) en courant alternatif; et un circuit de traitement du signal de déséquilibre fourni par chaque pont, caractérisé en ce que le circuit de traitement comporte: un premier échantillonneur-bloquer (5) précédé d'un étage d'amplification (6) à la sortie de chaque pont de destiné à réaliser la démodulation synchrone du signal de déséquilibre du pont associé; un second échantillonneur-bloqueur (7) associé à convertisseur analogique-numérique (8) pour réaliser l'échantillonnage et la conversion sous forme numérique du signal de déséquilibre démodulé de chaque pont; et un calculateur (9) recevant lès signaux numériques fournis par le convertisseur.

6. Dispositif selon la revendication 5, caractérisé en ce que les bobines, décalées les unes par rapport aux autres, sont disposées à l'intérieur d'un bloc de matière diélectrique rigide (2), constituant une sonde, et muni de moyens pour assurer son déplacement relatif par rapport au produit.

7. ' Dispositif selon l'une quelconque des revendications 5 et 6, caractérisé en ce que le calculateur (9) est du type »microprocesseur«.

8. Application du procédé selon les revendications 1 et 2 et du dispositif selon les revendications 1 et 2 et du dispositif selon les revendications 5 à 7 au sondage à froid de billettes carrées ou rectangulaires.

9. Application selon la revendication 8, caractérisé en ce que les quatre faces de la billette sont inspectées simultanément à l'aide de groupes identiques de bobines d'induction.

**Patentansprüche**

1. Kontrollverfahren mittels Foucaultschemstrom (Wirbelstrom) eines metallischen Produktes das mit mindestens zwei, in relativer Bewegung in Bezug auf das Produkt (1), durch Wechselstrom versorgte Induktionsspulen elektromagnetisch gekoppelt ist, Spulen die paarweise gruppiert und das, oder jedes Spulenpaar (aa'; bb'; cc') sich in einer, mit Wechselstrom versorgten Brücke (3) angeordnet befindet, Brücke deren Gleichgewichtsstörungssignal aufgefangen wird um das Vorhandensein einer Fehlerstelle in dem kontrollierten Produkt anzuzeigen, dadurch gekennzeichnet:

— daß man eine synchrone Demodulation des Gleichgewichtsstörungssignals mittels Projektion auf eine vorgewählte Achse vornimmt um eine aus dem Gleichgewicht befindliche Spannung zu liefern,

— daß man eine Probenahme der aus dem Gleichgewicht befindlichen Spannung in vorbestimmten Zeitabständen vornimmt und diese Spannung in digitale Signale umwandelt;

— daß man die erzielten digitalen Werte speichert,

— daß man den Mittelwert der digitalen Werte errechnet um eine Basislinie zu erhalten,

— daß man den Unterschied zwischen der Basislinie und jedem der gespeicherten digitalen Werte durchführt,

— daß man diese Unterschiede, oder deren absolute Werte, an zwei vorbstimmten Schwellen vergleicht, deren eine dem Wert des kleinsten Unterschiedes entspricht, dessen Vorhandensein erfaßt werden muß, und dessen anderer einem höheren Wert entspricht,

— daß man Kontrollabschnitte in Abhängigkeit der Länge des Produktes bestimmt, so daß die Summe der Abschnittsbreiten ungefähr gleich der Länge des Produktes sei

— daß man, für jeden Abschnitt, die Summe der absoluten Werte der Unterschiede zwischen der Basislinie und jedem der gespeicherten absoluten Werte errechnet, und

— daß man jede dieser Summen mit einer vorbestimmten Schwelle vergleicht.

2. Verfahren nach Anspruch 1, dadurch gekennzeichnet daß man, im Falle gleichartiger Produktreihen, von den gespeicherten digitalen Werten die für das vorhergehende Produkt erhaltene Basislinie abzieht und daß man die Vergleiche, ausgehend von den erzielten Werten, mit den drei Schwellen vornimmt.

3. Verfahren nach irgendwelchem der Ansprüche 1 oder 2, dadurch gekennzeichnet, daß die Abschnitte eine höhere Anzahl aufweisen als nötig wäre um das gesamte Produkt abzudecken und daß sich dieselben teilweise überdecken.

4. Verfahren nach irgendwelchem der Ansprüche 1 bis 3, dadurch gekennzeichnet, daß die Breiten der Abschnitte bestimmt werden können.

5. Vorrichtung zur Ausführung des Verfahrens nach Anspruch 1, bestehend aus Induktionsspulen in geraden Anzahlen, paarweise gruppiert, das, oder jedes Spulenpaar (aa'; bb'; cc') in einer Brücke (3) angeordnet, die an eine Wechselstromversorgungsstelle (4) angeschlossen ist und aus einem Verarbeitungskreis des von jeder Brücke gelieferten Gleichgewichtsstörungssignal, dadurch gekennzeichnet, daß der Verarbeitungskreis ausgestattet ist mit einem Probenehmer-Absperrer (5) und einer, an jedem Brückenausgang vorgeschaltete Verstärkerstufe (6) welche die Aufgabe hat die synchrone Demodulation des Gleichgewichtsstörungssignal der zugeteilten Brücke zu bewerkstelligen, mit einem zweiten Probenehmer-Absperrer (7) der einem analog-digitalen Umsetzer (8) zugeteilt ist, mit der Aufgabe die Probenahme und die Umwandlung des demodulierten Gleichgewichtsstörungssignal in digitaler Form durchzuführen und mit einem Rechengerät (9) das die vom Umwandler gelieferten digitalen Signale aufnimmt.

6. Vorrichtung nach Anspruch 5, dadurch gekennzeichnet, daß die Spulen, die einen in Bezug auf die anderen verschoben im Innern eines aus einem harten nichtleitenden Material gebildeten Block (2) angeordnet sind, und eine Sonde bilden die mit Mitteln versehen ist um seine relative Verschiebung in Bezug auf das Produkt zu gewährleisten.

7. Vorrichtung nach irgendwelchem der Ansprüche 5 und 6, dadurch gekennzeichnet, daß das Rechengerät (9) der Art »Mikrocomputer« entspricht.

8. Anwendung des Verfahrens nach den Ansprüchen 1 und 2 und der Vorrichtung nach den Ansprüchen 5 bis 7 zur Kontrollotung von viereckigen oder rechteckigen vorgewalzten Barren in kaltem Zustand.

9. Anwendung nach Anspruch 8, dadurch gekennzeichnet, daß die vier Seiten des Barrens gleichzeitig, mittels völlig gleichen Induktionsspulengruppen, kontrolliert werden.

**Claims**

1. Inspection process by means of eddy currents of a metal product electromagnetically coupled with at least two induction coils in motion in relation to the product (1) and supplied with alternating current, the coils being arranged in pairs and each of which (aa', bb', cc') being placed in a bridge (3) supplied with alternating current and of which the unbalanced signal is collected to provide information as to the presence of a defect in the inspected product, characterized in that:

— synchronous demodulation of the unbalanced signal is performed through projection along an axis selected beforehand to generate an unbalanced voltage,
— sampling of the unbalanced voltage is made at predetermined time intervals and this voltage is converted to digital signals,
— the resulting digital values obtained are stored,
— the mean value of these digital values are computed for obtaining a baseline,
— the difference between the baseline and each stored digital value is made,
— these differences or their absolute values are compared with two predetermined thresholds, one of which corresponds to the smaller difference whose presence is to be detected, the other corresponding to a higher value,
— inspection sections are determined, according to the length of the product so that the summed widths of the sections be substantially equal to the length of the product,
— for each section, the summed absolute values of the differences between the baseline and each stored absolute value is computed, and,
— each such summation is compared with a predetermined threshold.

2. A process according to claim 1, characterized in that, where series of products of the same kind are involved, the baseline obtained for the previous product is deducted from the stored digital valves and comparisons are made with the three thresholds from the values obtained.

3. A process according either to claim 1 or 2, characterized in that the sections are in greater number than that needed for covering the whole product and partly overlap.

4. A process according to any claim 1 to 3 characterized in that the width of the sections are adjustable.

5. A device for implementing the process according to claim 1 , comprising: induction coils in even number and arranged in pairs each pair of coils (aa', bb', cc') being set in a bridge (3) connected to an alternating current power supply (4); and a circuit for processing the unbalanced signal fed out by each bridge, characterized in that the processing circuit includes: an inital sample-and-hold device (5) ahead of which is an amplification stage (6) at the output of each bridge and designed to achieve synchronous demodulation of the unbalanced signal of the associated bridge; a second sample-and-hold device (7) associated with an analogue-to-digital converter (8) to achieve sampling and conversion in digital form of the demodulated unbalanced signal of each bridge; and a computer (9) receiving the digital signals fed out by the converter.

6. A device according to claim 5, characterized in that the coils are staggered in relation to one another and arranged within a piece of rigid dielectric material (2), making up a probe and provided with the means for ensuring its motion in relation to the product.

7. A device according to either claim 5 or 6, characterized in that the computer (9) is of the »microprocessor« type.

8. Application of the process according to claims 1 and 2 and of the device according to claims 5 to 7 for cold probing of square or rectangular billets.

9. Application according to claim 8, characterized in that the four sizes of the billet are inspected concurrently by means of identical sets of induction coils.

FIG_UNIQUE

0 021 893